# EUROPEAN PATENT APPLICATION

(11) **EP 4 804 067 A1**
(43) Date of publication of application: **09.09.2026**
(21) Application number: 26162778.0
(22) Date of filing: 06.03.2026
(51) Int. Cl.: G06F 21/57, G06F 21/60, H04L 41/22, G06Q 50/04

(54) **METHOD AND SYSTEM FOR BUILDING DATABASE THAT EFFECTIVELY RESPONDS TO CYBERSECURITY REGULATIONS**

(30) Priority: 06.03.2025 KR 20250029313; 19.09.2025 KR 20250135434; 30.09.2025 KR 20250143083; 20.10.2025 KR 20250152118
(71) Applicant: Fescaro Co. Ltd., Suwonsi, Gyeonggi-do 16512 (KR)
(72) Inventor: HONG, Seokmin, Suwonsi 16512 Gyeonggi-do (KR); LEE, Hyunjung, Suwonsi 16512 Gyeonggi-do (KR)
(74) Representative: Ström & Gulliksson AB

(57) **Abstract**

Provided is a method for building a database configured to effectively respond to cybersecurity regulations including configuring a first database, including one or more cybersecurity items and a first dataset which is an entire dataset of the respective cybersecurity items, configuring a second database which is generated for each version and includes a second dataset of the respective cybersecurity items, and configuring a third database which is generated for each project and includes a third dataset of the respective cybersecurity items, wherein the second dataset includes a dataset generated by copying one or more individual datasets of a first dataset in the first database, and the third dataset comprises a dataset which refers to all or some of datasets stored in the second DB of a particular version and is generated for each of a plurality of containers belonging to the project.

## Description

### BACKGROUND

### 1. Field

Embodiments relate to a method and system for building a database that effectively responds to cybersecurity regulations.

### 2. Description of the Related Art

Currently, the mobility industry has faced a significant increase in the threat of cyberattacks due to increased electrification and connectivity. Accordingly, there is a trend toward strengthening cybersecurity regulations internationally. For example, the United Nations Economic Commission for Europe (UNECE) has established the international standard UNR 155 on automotive cybersecurity, and the Korean Ministry of Land, Infrastructure and Transport has also revised the Automobile Management Act to stipulate that only automobile manufacturers and import and sale companies that have received cyber security management system (CSMS) certification may sell automobiles in the country. In addition, the Cyber Resilience Act (CRA), which the act that mandates the enhancement and management of cybersecurity throughout life cycles of corresponding products when all products (hardware and software) including digital elements, as well as automobiles, are released or distributed in the European Union (EU) market, is also scheduled to be implemented and thus has affected the entire mobility industry.

Various types of cybersecurity regulations have demanded organizational processes and management systems to manage cyber threats and risks and protect mobility devices from cyberattacks, and to respond to the regulations, systems are needed to ensure cybersecurity, such as design, development, production, and maintenance of mobility devices throughout the entire life cycles.

### SUMMARY

The problems to be solved by the disclosure are to provide a method and system for building a database that effectively responds to cybersecurity regulations.

The problems to be solved by the disclosure are not limited to the problems mentioned above, and other problems and advantages of the disclosure that are not mentioned may be understood by the following description and may be more clearly understood by embodiments. In addition, it may be appreciated that the problems and advantages to be solved by the disclosure may be implemented by the means and combinations thereof defined in claims.

According to an embodiment, provided is a method of building a database that may effectively respond to cybersecurity regulations including configuring a first database, including one or more cybersecurity items and a first dataset which is an entire dataset of the respective cybersecurity items, configuring a second database which is generated for each version and includes a second dataset of the respective cybersecurity items, and configuring a third database which is generated for each project and includes a third dataset of the respective cybersecurity items, wherein the second dataset includes a dataset generated by copying one or more individual datasets of a first dataset in the first database, and the third dataset comprises a dataset which refers to all or some of datasets stored in the second database of a particular version and is generated for each of a plurality of containers belonging to the project.

In the disclosure, the configuring the second database may include generating a second database of an n^{th} version, providing a second database generation interface configured to select, for the respective cybersecurity items, one or more individual datasets from all datasets in the first database, and storing, in the second database of the n^{th} version, a second dataset generated by copying the one or more individual datasets selected via the second database generation interface, wherein n includes a natural number of 1 or more.

In the disclosure, the method may further include providing a relationship dataset generation interface configured to establish a relationship between two preset cybersecurity items from among the plurality of cybersecurity items, generating a relationship dataset in which a relationship between a particular dataset of a first cybersecurity item and a particular dataset of a second cybersecurity item from among the plurality of cybersecurity items is established by using a value acquired via the relationship dataset generation interface, and storing the relationship dataset in the second database.

In the disclosure, the generating the second database of the n^{th} version may include generating the second database of the n^{th} version by acquiring, from a user terminal, a request for generating a second database of a new version.

In the disclosure, the generating the second database of the n^{th} version may include, in a case where data added to the first database passes a preset verification, generating the second database of the n^{th} version.

In the disclosure, the second database generated for each version may have, for each version, one state from a first state and a second state, and a second dataset included in the second database is modified only when the second database is in the first state.

In the disclosure, a second database of a new version is generated only when a second database of an existing version is in the second state, and in a case where the second database of the new version is generated, the state of the second database of the existing version does not transition from the second state to the first state.

In the disclosure, the configuring the third database may include receiving project information referring to a second database of a particular version, providing a third database generation interface configured to select, for one or more preset cybersecurity items, one or more individual datasets from a second dataset stored in the second database of the particular version, on the basis of the project information, generating a third dataset such that one or more individual datasets selected via the third database generation interface refer to a value stored in the second database, and storing, for each container, the third dataset in the third database.

In the disclosure, in the receiving the project information referring to the second database of the particular version, the second database of the particular version includes the second database that is in the second state.

In the disclosure, the method may further include generating an additional dataset of remaining cybersecurity items excluding the preset cybersecurity items, on the basis of the third dataset of the preset cybersecurity items, and storing, in the third database, the additional dataset generated for each container.

In the disclosure, the method may further include, after receiving the project information, acquiring cybersecurity level information of each container corresponding to the project information, and displaying a predefined dataset corresponding to the preset cybersecurity items, on the basis of the cybersecurity level information of each container.

In the disclosure, the configuring the first database may include providing a first database generation interface configured to input a dataset of attributes for the respective cybersecurity items, and configuring the first database by using a value acquired via the first database generation interface.

In the disclosure, even in a case where some of all datasets included in the first database is changed, modified, or added, the value stored in a pre-generated second database is not automatically changed.

According to another embodiment, provided is a system for building a database that may effectively respond to cybersecurity regulations including a first database, including one or more cybersecurity items and a first dataset which is an entire dataset of the respective cybersecurity items, a second database which is generated for each version and includes a second dataset of the respective cybersecurity items, and a third database which is generated for each project and includes a third dataset of the respective cybersecurity items, wherein the second dataset includes a dataset generated by copying one or more individual datasets of a first dataset in the first database, and the third dataset includes a dataset which refers to all or some of datasets stored in the second database of a particular version and is generated for each of a plurality of containers belonging to the project.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a system diagram for a method of building a database (DB) for responding to cybersecurity regulations, according to an embodiment;
FIG. 2 is a block diagram of a DB according to an embodiment;
FIG. 3 illustrates an example of a first DB generation interface according to an embodiment;
FIG. 4 illustrates an example of a second DB generation interface according to an embodiment;
FIG. 5 illustrates an example of a relationship establishment interface according to an embodiment;
FIG. 6 shows views illustrating concepts of a first state (check-out) and a second state (check-in) of a second DB, according to an embodiment;
FIG. 7 is a view illustrating a structure of a third DB according to an embodiment;
FIG. 8 illustrates an example of a third DB generation interface according to an embodiment; and
FIG. 9 is a block diagram of a server according to an embodiment.

### DETAILED DESCRIPTION

Advantages and features of the disclosure, and methods of achieving the same will become apparent with reference to embodiments described in detail in conjunction with the accompanying drawings. However, it should be understood that the disclosure is not limited to embodiments presented below, but may be implemented in various different forms, and includes all modifications, equivalents, and alternatives included in the spirit and scope of the disclosure.

Terms used herein are only used to describe particular embodiments, and are not intended to limit the disclosure. The singular forms are intended to include the plural forms as well, unless the context clearly indicates otherwise. It should be understood that the terms "comprises," "comprising," "have," and/or "having," when used herein, specify the presence of stated features, integers, steps, operations, elements, and/or components, but do not preclude the presence or addition of one or more other features, integers, steps, operations, elements, components, and/or groups thereof.

Some embodiments of the disclosure may be represented by functional block components and various processing operations. Some or all of these functional blocks may be implemented as various numbers of hardware and/or software components that execute particular functions. For example, the functional blocks of the disclosure may be implemented by one or more microprocessors or implemented by circuit components for certain functions. In addition, for example, the functional blocks of the disclosure may be implemented in various programming or scripting languages. The functional blocks may be implemented as algorithms executed on one or more processors. In addition, the disclosure may employ the related arts for electronic environment setup, signal processing, and/or data processing. Terms such as "mechanism", "element", "means", and "component" may be broadly used and are not limited to mechanical and physical components.

In addition, the connection lines or connection members between the components shown in the drawings merely illustrate examples of functional connections and/or physical or circuit connections. In an actual apparatus, connections between components may be represented by various replaceable or additional functional connections, physical connections, or circuit connections.

Hereinafter, an operation performed by a user may refer to an operation performed by the user through a user terminal. For example, a command corresponding to an operation performed by the user may be input into the user terminal via an input device (e.g., a keyboard, a mouse, or the like) embedded in or additionally connected to the user terminal. As another example, a command corresponding to an operation performed by the user may be input into the user terminal via a touch screen of the user terminal. The operation performed by the user may include a certain gesture. For example, the gesture may include tap, touch and hold, double tap, drag, panning, flick, drag and drop, or the like.

Hereinafter, the disclosure is described in detail with reference to the accompanying drawings.

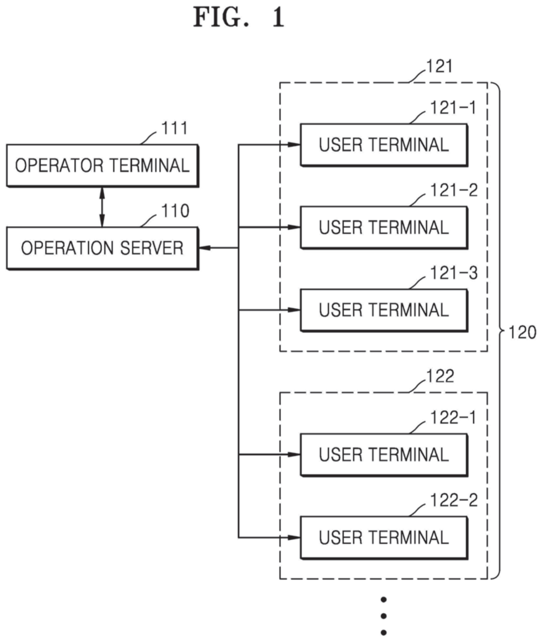

FIG. 1 is a system diagram for a method of building a database (DB) for responding to cybersecurity regulations, according to an embodiment.

A system according to an embodiment may include an operation server 110, an operator terminal 111, and a user terminal 120.

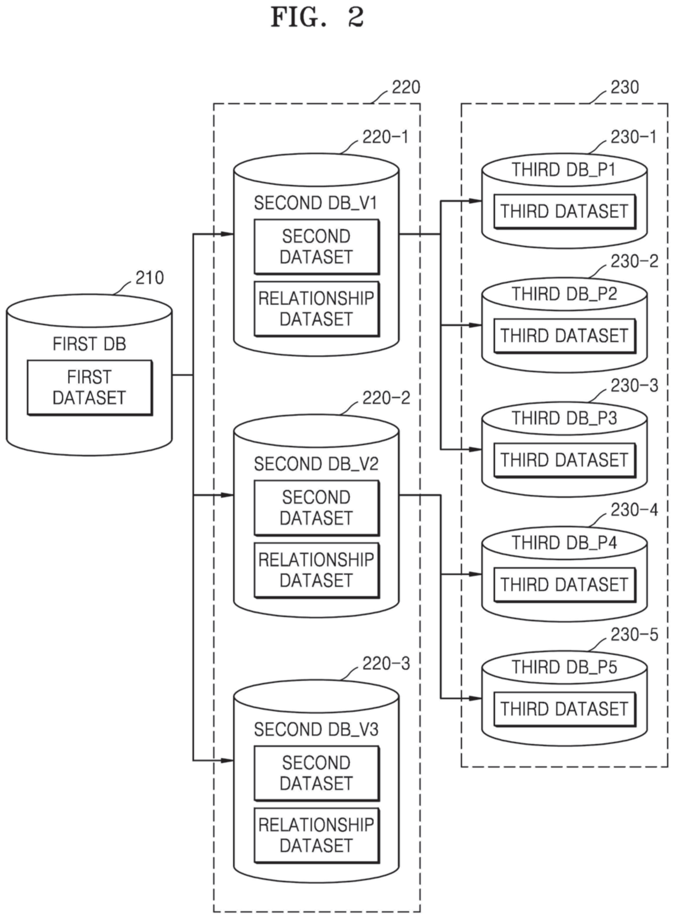

The operation server 110 may correspond to a server that provides a method of building a DB for responding to cybersecurity regulations and may correspond to a cybersecurity management system (CSMS) portal operation server. For example, the operation server 110 may be controlled by the operator terminal 111, and may provide an interface to the user terminal 120 and process data. In some embodiments, the operation server 110 may include a DB described below with reference to FIG. 2 and provide a DB building method to allow a user to build a DB.

In some embodiments, the operator terminal 111 may correspond to a terminal of a manager that operates and manages the operation server 110 and may correspond to a terminal that allows the manager to access the operation server 110 and perform overall setup and management of the system. The user terminal 120 may correspond to a terminal that allows the user to input and manage cybersecurity data via a user interface provided by the operation server 110. In some embodiments, the user may refer to a cybersecurity responsible person for an automobile manufacturer (OEM) or a controller/component manufacturer (Tier), and the number of responsible persons may be one or more. The operator terminal 111 and the user terminal 120 may include input and output devices for inputting and outputting data.

Although not illustrated in FIG. 1, the operation server 110 may include a processor and a DB. Hereinafter, a method of building a DB that may effectively respond to cybersecurity regulations for regulatory compliance, according to the disclosure, is described by the description of the operation server 110.

The user terminal 120 may correspond to a terminal that allows the user to input and manage data related to cybersecurity (including a dataset, relationship establishment, a DB configuration, DB version management, container management, project generation, and the like) via the user interface provided by the operation server 110. For example, a user terminal 120 may belong to any one of user groups 121, 122, .... In an embodiment, a first user group 121 may correspond to an OEM group, a second user group 122 may correspond to a tier group, and a plurality of Tier groups may be present.

For example, user terminals 121-1, 121-2, and 121-3 belonging to the first user group 121 may correspond to terminals of OEM administrator (Admin), an OEM system engineer (SE), and an OEM cybersecurity manager (CSM), respectively, and user terminals 122-1 and 122-2 belonging to the second user group 122 may correspond to a tier CSM and a tier SE, respectively.

Roles between user terminals of the respective user groups (e.g., the first user group 121 and the second user group 122) may not be fixed, and may be changed or modified.

Via the interfaces described above, the operation server 110 of the disclosure may systematically manage data needed for responding to cybersecurity regulations and may automatically link data needed in individual cybersecurity engineering operations, on the basis of items and relationships defined in a pre-configuration operation. Hereinafter, a method and system for building a DB, according to the disclosure, are described in detail together with the drawings.

FIG. 2 is a block diagram of a DB according to an embodiment.

Referring to FIG. 2, a DB may have a three-stage hierarchical structure of a first DB 210, a second DB 220, and a third DB 230.

The first DB 210 may correspond to a DB including the entire dataset for attributes of respective cybersecurity items, and may include the entire dataset for respective cybersecurity items. In some embodiments, the cybersecurity items may include cybersecurity control (hereinafter, SC), a cybersecurity control requirement (hereinafter, CSR), a verification test case (V-TC), a penetration test case (hereinafter, P-TC), a predefined threat (a threat defined in regulations or the like (hereinafter, THR)), and a predefined mitigation (mitigation defined in regulations or the like (hereinafter, MIT)), but are not limited thereto. In some embodiments, the first DB 210 may correspond to a DB including a first dataset which is the entire dataset of respective cybersecurity items. A version of the first DB 210 may not be managed and may always be kept in the latest state. However, a history of a change in each dataset in the first DB 210 may be inquired.

In some embodiments, a dataset may correspond to data about item-specific attributes of each cybersecurity item. For example, a dataset of a cybersecurity item SC may have attributes SC-ID and SC Description. In some embodiments, the item-specific attributes may have a compulsory attribute and an optional attribute. In some embodiments, one individual dataset may need to include a value of a compulsory attribute.

The second DB 220 may be generated for each version, and the second DB 220 of each version may include a second dataset and a relationship dataset. A version may be managed in a manner that a second DB may be generated as a new version each time a new DB is generated and a second DB of an existing version may be maintained in an unchangeable state (check-in state). In some embodiments, a history of a change in the second DB 220 may also be inquired.

For example, a second dataset may correspond to a value generated by copying an individual dataset selected by a user from a first dataset. For example, the second dataset may be generated as a value obtained by copying a portion of the first dataset. A second dataset may be generated each time a new version of a second DB is generated, and thus, a second dataset for each version of the second DB may be different.

A relationship dataset of a second DB may correspond to a value in which datasets of first and second cybersecurity items of the second dataset are related and connected to each other. The first and second cybersecurity items may correspond to a preset pair of SC and CSR, CSR and V-TC, R_THR and P-TC, or R_THR and R_MIT. In some embodiments, a relationship dataset may need to be generated each time a new version of a second DB is generated, and thus, a relationship dataset for each version of the second DB may be different.

The third DB 230 may refer to a second DB of a particular version and may be generated for each project. For example, a third DB 230-3 of a project P3 may refer to a second DB 220-1 of a first version. In some embodiments, "refer to" may indicate having only a reference value, not copying original data. In some embodiments, a version of a third DB may not be managed, and only a history of a change in the version of the third DB may be managed.

A third dataset may correspond to a reference value of [second dataset + relationship dataset] to which a compliance matrix for each container (e.g., a vehicle, a system, or a component) is applied. In some embodiments, the application of the compliance matrix may indicate that only some datasets to be applied to corresponding containers from among values of a second DB are set to be referred to. When a user selects a dataset of particular cybersecurity items CSR and P-TC, which is to be referred to, from a second dataset in a second DB of an n^{th} version, a remaining dataset may be completed (a relationship dataset may also be automatically generated).

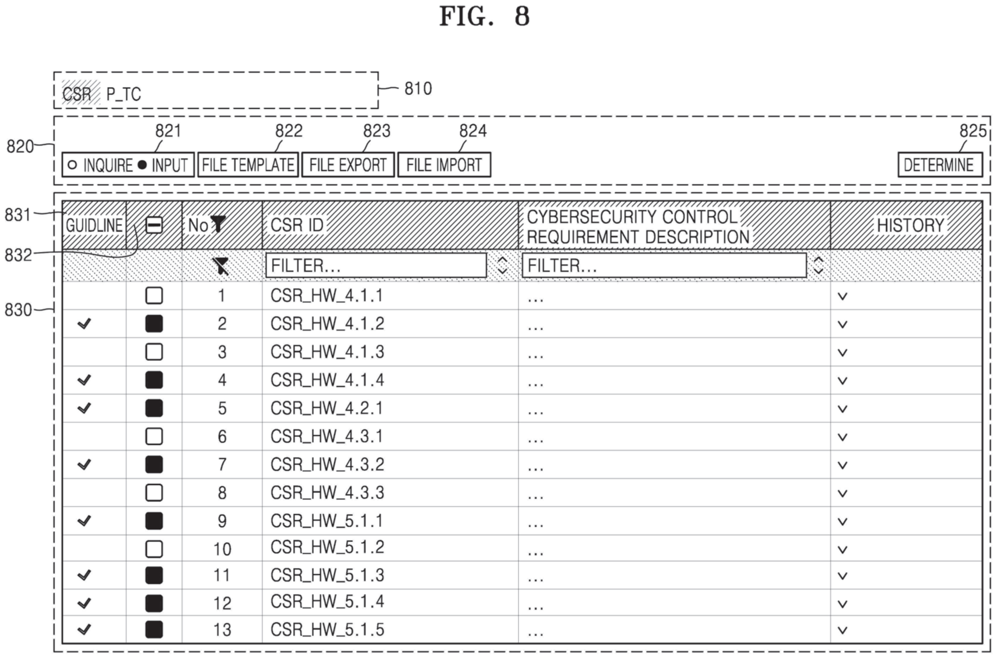

The detailed description of the third dataset is given below with reference to FIG. 8.

A lower DB may be built only by a method of copying or referring to contents of an upper DB, and thus, data consistency may be ensured by blocking a possibility of adding any cybersecurity item or dataset or including incorrect information.

In some embodiments, a complex structure in which different cybersecurity requirements are applied to various types of vehicle types and components may be systematically managed via a three-layer DB.

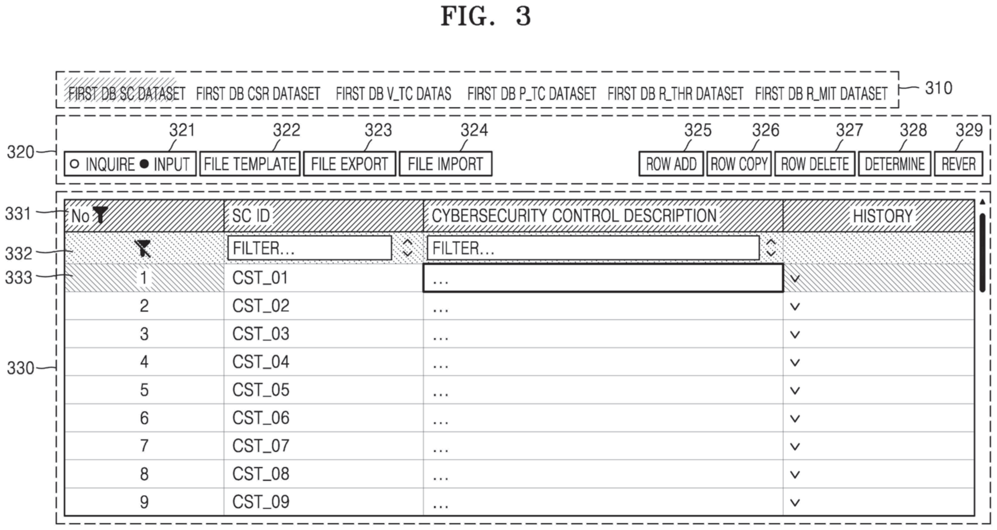

FIG. 3 illustrates an example of a first DB generation interface according to an embodiment.

A user may input a dataset of attributes of respective cybersecurity items by using a first DB generation interface, and the entire input dataset may be referred to as a first dataset.

The user may select, via an item selection area 310, a cybersecurity item to be inquired or input, perform a function related to a dataset inquiry or input via a function selection area 320, and may inquire or input a dataset via a table 330.

Referring to FIG. 3, the item selection area 310 may correspond to a tab that allows a selection of a cybersecurity item being inquired or input. In some embodiments, a cybersecurity item may correspond to a preset value (in the example of FIG. 3, SC, CSR, V_TC, P_TC, R_THR, or R_MIT).

In some embodiments, the function selection area 320 may correspond to an area that allows a selection of an inquiry or input state or a selection of a function for a data input.

In some embodiments, an inquiry input tab 321 may correspond to a tab that allows a selection of whether to inquire or input a dataset. For example, only when an input is selected, buttons 322 to 329 may appear and a dataset may be input and modified. The inquiry input tab 321 may be selected to have one of two states of inquiry and input. The example of FIG. 3 may show an example in which the inquiry input tab 321 is in an input state.

In some embodiments, a template button 322 may correspond to a button for downloading a preset template file for file import.

In some embodiments, an export button 323 may correspond to a button for performing export by downloading a dataset file for a cybersecurity item.

In some embodiments, an import button 324 may correspond to a button for performing import by uploading a dataset file for a cybersecurity item.

In some embodiments, a row add button 325 may correspond to a button for adding a new row (e.g., a dataset) to the table 330.

In some embodiments, a row copy button 326 may correspond to a button for copying a row present at a currently selected location to generate a row below the row.

In some embodiments, a row delete button 327 may correspond to a button for deleting a row present at a currently selected location.

In some embodiments, a determine button 328 may correspond to a button for determining and storing an input or modified dataset.

In some embodiments, a revert button 329 may correspond to a button for reverting an input or modified dataset to a state before being determined.

In the example of FIG. 3, in the case where a selected cybersecurity item is SC, the cybersecurity item SC may include attributes of an SC ID and an SC description. In some embodiments, the attributes SC ID and SC description may correspond to compulsory attributes, and an optional attribute may be added via a user input.

No and history may correspond to values that are automatically input, and the history may be provided in the form of a drop-down menu by recording a change time point and a change person each time a corresponding dataset is changed. In some embodiments, a history of a change in an individual dataset of a first DB may be managed and displayed, but the first DB may not be managed by version.

One row of the table 330 may constitute one individual dataset, and individual datasets may need to include values for compulsory attributes. Individual dataset values displayed in the table 330 may be based on the most recently changed value.

For example, the table 330 may correspond to an area for inquiring, inputting, or modifying an actual dataset of attributes for respective cybersecurity items.

In some embodiments, an attribute row 331 may correspond to a header row, and may correspond to a row indicating attributes of respective cybersecurity items.

In some embodiments, a filter row 332 may correspond to a row that provides filter and search functions, and may correspond to a row for performing a search and display on the basis of a filtering column.

In some embodiments, an individual dataset 333 may correspond to data including particular values for attributes of cybersecurity items. In the table 330, one row may constitute one individual dataset. For example, in the embodiment of FIG. 3, a first individual dataset of SC may correspond to a dataset in which an SC ID is CST_01 and a SC description is .... The user may directly input the individual dataset 333 or input the individual dataset 333 at once via a file import function.

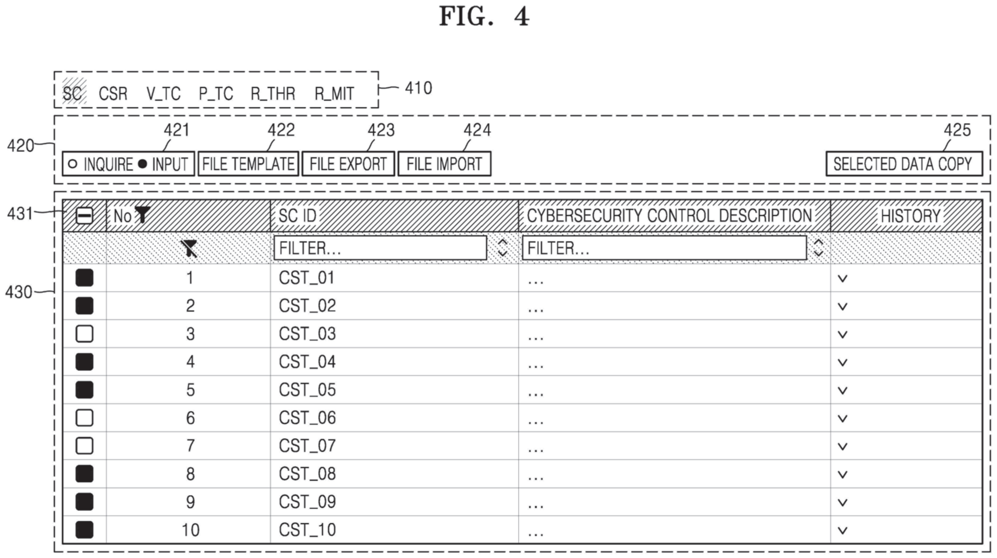

FIG. 4 illustrates an example of a second DB generation interface according to an embodiment.

A user may generate a second dataset by selecting one or more individual datasets from a first dataset of respective cybersecurity items and copying the selected individual datasets, by using a second DB generation interface.

For example, the user may select, via an item selection area 410, a cybersecurity item to be inquired or copied, perform a function related to a dataset inquiry or input via a function selection area 420, and via a table 430, inquire a second dataset or select, from a first dataset, a dataset to be copied.

Data displayed in the table 430 when an inquiry input tab 421 is in an input state may correspond to the entire first dataset at a point in time of input. In the example of FIG. 4, a dataset displayed in the table 430 may correspond to the entire first dataset of an SC item. In the case where a first DB is different when a second DB of a first version is input and when the second DB of a second version is input (in the case where the first DB is updated), a first dataset displayed in an interface for generating a second DB of each version may also be different.

The user may select, via a check box or the like, an individual dataset to be copied to a second DB by viewing a first dataset displayed in the table 430 when the inquiry input tab 421 is in the input state, and the selected dataset may be stored in the second DB as a second dataset. In some embodiments, a value being stored may correspond to a value obtained by copying a selected dataset.

Referring to FIG. 4, the item selection area 410 may correspond to a tab that allows a selection of a cybersecurity item being inquired or input. In some embodiments, a cybersecurity item may correspond to a preset value (similarly to the illustration in FIG. 3, SC, CSR, V_TC, P_TC, R_THR, or R_MIT).

In some embodiments, the function selection area 420 may correspond to an area that allows a selection of an inquiry or input state or a selection of a function for a data input.

In some embodiments, the inquiry input tab 421 may correspond to a tab that allows a selection of whether to inquire or input a dataset. For example, only when an input is selected, buttons 422 to 425 may appear and a dataset may be input and modified.

In some embodiments, a template button 422 may correspond to a button for downloading a preset template file for file import.

In some embodiments, an export button 423 may correspond to a button for performing export by downloading a dataset file of a cybersecurity item.

In some embodiments, an import button 424 may correspond to a button for performing import by uploading a dataset file of a cybersecurity item. In the case where an uploaded file includes a dataset that is not stored in a first DB or does not match (e.g., in the case where an SC ID and an SC description do not match each other), an error may be displayed (e.g., an error validation may be performed).

In some embodiments, a data copy button 425 may correspond to a button for copying, into a second DB, a dataset selected from a first dataset via a check box 431 and storing the same as a second dataset.

In some embodiments, the table 430 may correspond to an area for inquiring, inputting, or modifying a second dataset of respective cybersecurity items.

In some embodiments, the check box 431 may correspond to a box for selecting, from a first dataset, an individual dataset to be copied as a second dataset.

As in the embodiment of FIG. 4, when the inquiry input tab 421 is in an input state, a case may be assumed that the user selects and stores, via the check box 431, datasets having SC IDs CST_01, CST_02, CST_04, CST_05, CST_08, CST_09, and CST_10. In some embodiments, when the inquiry input tab 421 is changed to an inquiry state, only selected and stored datasets may be displayed, and CST_03, CST_06, and CST_007 may not be displayed. The above example may be caused by an input given by the user to copy and store, as a second dataset of SC, only individual datasets having SC IDs CST_01, CST_02, CST_04, CST_05, CST_08, CST_09, and CST_10.

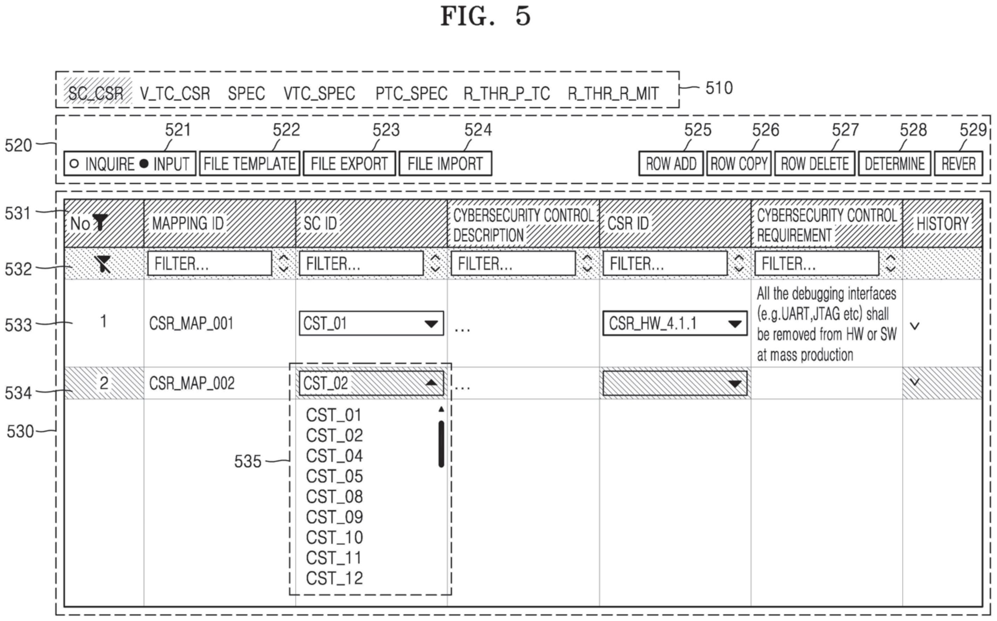

FIG. 5 illustrates an example of a relationship establishment interface according to an embodiment.

A relationship establishment interface may correspond to an interface that may establish, for two preset cybersecurity items, a relationship between individual datasets of a second dataset.

A relationship selection area 510 may allow a user to select a pair of cybersecurity items for which the user desires to establish a relationship, e.g., may provide a tab for establishing a relationship between SC and CSR, V-TC and CSR, THR and P-TC, or THR and MIT.

In some embodiments, the second DB generation interface of FIG. 4 and the relationship establishment interface of FIG. 5 may be displayed on one screen. For example, the relationship selection area 510 may be displayed next to the item selection area 410.

For example, a pair of cybersecurity items may correspond to a preset pair and may not be modified by the user, but may be added, deleted, and modified by only a manager.

A table 530 may be configured to connect and input a particular second dataset of a first cybersecurity item and a particular second dataset of a second cybersecurity item.

The relationship establishment interface may be provided to select an input of compulsory attributes (e.g., ID fields (e.g., an SC ID and a CSR ID)) of each pair of cybersecurity items from a drop-down menu and thus provide an interface allowing a selection only from a pre-input second dataset to prevent an incorrect input of configuration item IDs. For example, in the case where the user inputs only two pairs of compulsory attributes for establishing a relationship, remaining attribute values may be automatically loaded on the basis of a pre-stored second dataset.

Referring to FIG. 5, the relationship selection area 510 may correspond to a tab that allows a selection of a pair of cybersecurity items being inquired or input.

In some embodiments, a function selection area 520 may correspond to an area that allows a selection of an inquiry or input state, or a selection of a function for an input of a relationship dataset.

In some embodiments, an inquiry input tab 521 may correspond to a tab that allows a selection of whether to inquire or input a relationship dataset. For example, only when an input is selected, buttons 522 to 529 may appear and the relationship dataset may be input and modified.

In some embodiments, a template button 522 may correspond to a button for downloading a preset template file for file import.

In some embodiments, an export button 523 may correspond to a button for performing export by downloading a dataset file of a cybersecurity item.

In some embodiments, an import button 524 may correspond to a button for performing import by uploading a dataset file of a cybersecurity item. In the case where an uploaded file includes a dataset that does not match a second dataset, an error may be displayed (e.g., an error validation may be performed).

In some embodiments, a row add button 525 may correspond to a button for adding a new row (e.g., a relationship dataset) to the table 530.

In some embodiments, a row copy button 526 may correspond to a button for copying a row present at a currently selected location and generating a row below the row.

In some embodiments, a row delete button 527 may correspond to a button for deleting a row present at a currently selected location.

In some embodiments, a determine button 528 may correspond to a button for determining and storing an input or modified dataset.

In some embodiments, a revert button 529 may correspond to a button for reverting the input or modified dataset to a state before being determined.

In some embodiments, a table 530 may correspond to an area for inquiring or inputting a relationship dataset of a pair of cybersecurity items.

In some embodiments, an attribute row 531 may correspond to a header row, and may correspond to a row indicating attributes of each pair of cybersecurity items. For example, the attribute row 531 may display compulsory attributes and optional attributes of a pair of cybersecurity items that establish a current relationship.

In some embodiments, a filter row 532 may correspond to a row that provides filter and search functions, and may correspond to a row that allows an input of data to be searched for and displayed on the basis of a filtering column.

In some embodiments, in a relationship dataset 533, one row may constitute one relationship dataset. For example, the user may input the relationship dataset 533 by directly inputting the relationship dataset 533 or uploading the relationship dataset 533 via a file import function.

In some embodiments, a current input row 534 may correspond to a relationship dataset that is currently in an input state. For example, the current input row 534 may correspond to a row selected by the user or added via row addition. In some embodiments, the current input row 534 may include some cells that may be displayed in a distinguished color from another row.

In some embodiments, a compulsory input cell 535 may correspond to a cell that needs to be compulsorily input for establishing a relationship. The compulsory input cell 535 may be displayed in a distinguished color from another cell. In the example of FIG. 5, items corresponding to an SC ID and a CSR ID may correspond to compulsory input cells, and may be displayed in blue. In the compulsory input cell 535, the user may perform a selection and input only with respect to a preset second dataset, and in the example of FIG. 5, an interface for selecting an SC ID and a CSR ID only from data displayed in a drop-down format may be provided.

In an embodiment, in the case where the user selects CST_02 as the SC ID which is the compulsory input cell 535 in the current input row 534 and selects CSR_HW_4.1.1 as the CSR ID which is also the compulsory input cell 535, as values corresponding to the existing CST_02 and CSR_HW_4.1.1 may be automatically input as remaining attributes (a SC description, a CSR, and the like).

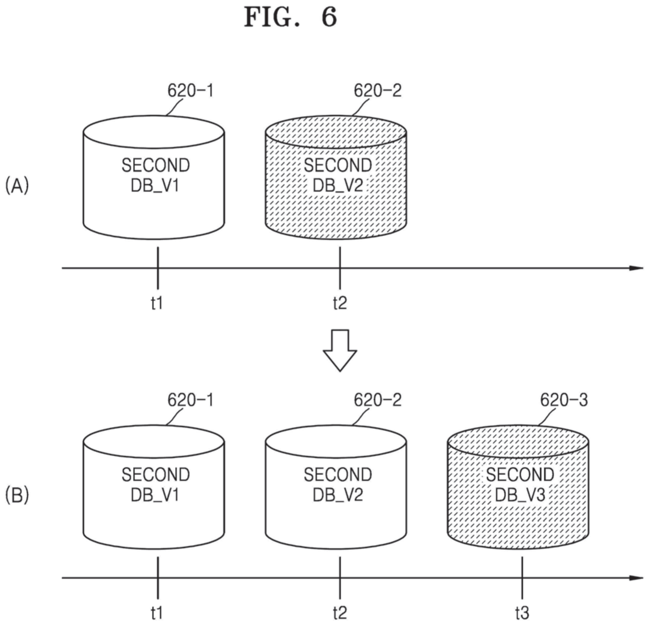

FIG. 6 are views illustrating concepts of a first state (check-out) and a second state (check-in) of a second DB, according to an embodiment.

Referring to FIG. 6, a first state (check-out) may correspond to a state in which a user may input and modify data in a DB, and a second state (check-in) may correspond to a state in which the user may not input and modify the data in the DB. As illustrated in FIG. 6, a second DB in the first state may be shaded.

A second DB 620-1 of a first version may correspond to a DB generated at a time t1 by copying a first DB, a second DB 620-2 of a second version may correspond to a DB generated at a time t2 by copying the first DB, and a second DB 620-3 of a third version may correspond to a DB generated at a time t3 by copying the first DB.

As illustrated in (A) of FIG. 6, at the time t2, the second DB 620-2 of the second version may be in the first state, for data input and modification when first generated. The user may switch the second DB 620-2 to a second state after completing the input and modification of the second DB 620-2.

As illustrated in (B) of FIG. 6, the second DB 620-3 of the third version, which is generated at the time t3 after the time elapses, may be similarly in the first state, for data input and modification when generated. In some embodiments, when generating the second DB 620-3 of a new version, all of the second DBs 620-1 and 620-2 of existing versions may need to be in the second state, and in the case where the second DBs 620-1 and 620-2 of the existing versions are in the first state, the second DB 620-3 of the new version may not be generated.

By using a DB structure and check-in and/or check-out methods described above, a second DB of each version may conform to, when generated, a first DB that reflects regulations, and even in the case where the first DB is updated, data in a second DB of an existing version may not be changed later.

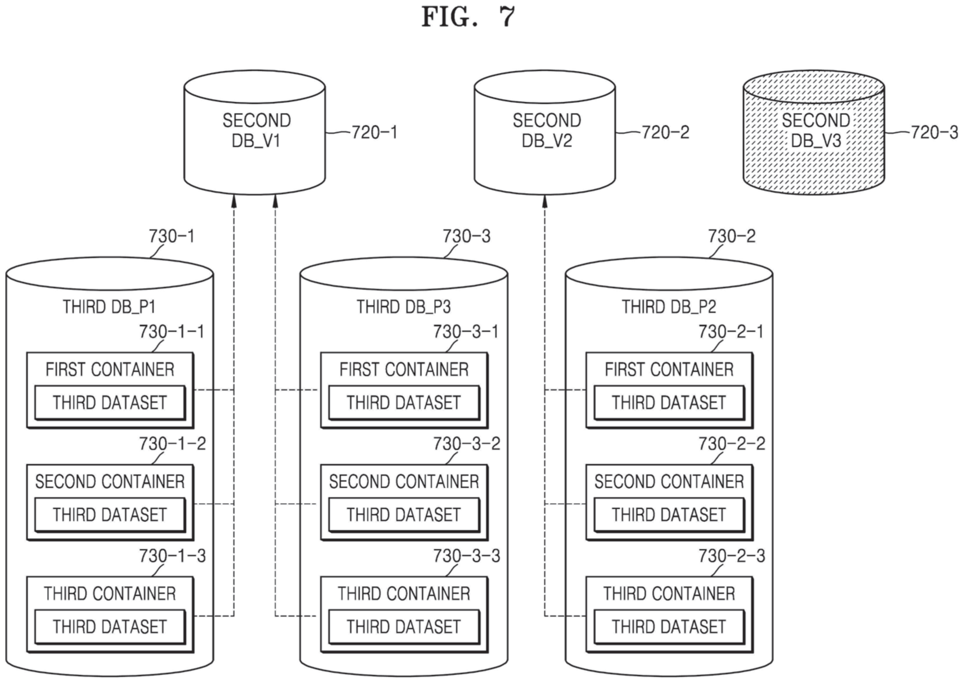

FIG. 7 is a view illustrating a structure of a third DB according to an embodiment.

For example, a third DB may be generated for each project, and a third dataset may be generated in each container within the third DB. The third DB may refer to a second DB of a particular version, and the version of the second DB that is referred to may be determined through a process of receiving project information.

In some embodiments, a third DB for each project may refer to a second DB of a particular version, and accordingly, a third dataset in each container within the third DB may also refer to the second DB of the particular version. For example, in the case where a third DB 730-1 of a project P1 refers to a second DB 720-1 of a first version, a third dataset in each container within the third DB 730-1 may also refer to the second DB 720-1 of the first version.

In some embodiments, a container may correspond to a word including a vehicle (a combination of systems or components), a system (a group of one or more subcomponents), and a component (an individual controller) and may correspond to a unit of cybersecurity management generated for each project.

A third dataset generated in each container may refer to some datasets that are selected via a cybersecurity work scope adjustment activity (hereinafter, a compliance matrix) from among datasets (a second dataset and a relationship dataset) of a second DB. Datasets referred to in individual containers may be different from each other. For example, a third dataset in a first container 730-1-1 may be different from a third dataset in a second container 730-1-2.

A third DB of each project may not compulsorily need to refer to a second DB of the latest version. For example, a third DB 730-3 of a project P3 may correspond to a third DB generated later than a third DB 730-2 of a project P2, but may refer to a second DB 720-1 of a first version.

A second DB referred to by a third DB may compulsorily need to be in a check-in state. For example, a third DB may not refer to a second DB 720-3 of a third version that is in a check-out state.

Third DBs of all projects may refer to standardized second DBs, and thus, redundant work of newly defining or retrieving cybersecurity items and datasets of an individual project may be eliminated.

A second DB, which is checked in and assigned to a project, may be no longer modified, and thus, stability of a project may be increased by preventing an unexpected change in a requirement criterion of a project being developed.

In the case where new cybersecurity vulnerability or regulations emerge, a first DB may be first updated and then reflected in a second DB of a new version, and in the case where a third DB corresponding to a new project refers to a second DB of the latest version, the latest cybersecurity level may be satisfied from the time when development is started. In some embodiments, in the case where even a new project satisfies regulations of a previous version according to a vehicle type, a third DB may refer to a second DB of a previous version and thus allow a flexible response to constantly changing regulations.

FIG. 8 illustrates an example of a third DB generation interface according to an embodiment.

A third DB generation interface may correspond to an interface that may perform a compliance matrix to select, for each container, a particular dataset, which is to be referred to, from among datasets in a second DB.

The embodiment of FIG. 8 may represent an interface for generating a third dataset corresponding to a particular container, in a third DB of a particular project. For example, activities illustrated in the example of FIG. 8 may need to be performed for each container.

An individual dataset stored in a second DB of a particular version may be selected for each container, and the particular version may conform to a version of a second DB referred to by a third DB in each project to which a container belongs.

The third DB generation interface may be configured not to select datasets of all cybersecurity items but to select only a dataset of particular cybersecurity items (e.g., CSR and P-TC in FIG. 8, but are not limited thereto)to allow a configuration of all of remaining third datasets. The above example may be because a third DB refers both a second dataset and a relationship dataset in a second DB and thus all third datasets may be automatically configured. In some embodiments, by selecting only a dataset of particular cybersecurity items, an additional dataset of remaining cybersecurity items may be generated and stored as a third dataset.

For user convenience, a guideline 831 on a compliance matrix may be displayed, and the guideline 831 may indicate whether a CSR (or P-TC) dataset matches a cybersecurity level (CSL) of a corresponding container. As in the example of FIG. 8, a check box 832 may be checked in advance to match the guideline 831 when loading the third DB generation interface. The user may perform a compliance matrix, by selecting a determine button 825 in the case where accepting the guideline 831 or by selecting or deselecting each check box 832 and then selecting the determine button 825 in the case where not accepting the guideline 831.

By displaying a CSR (or PTC) guideline for each CSL, an inefficient process of setting a compliance matrix for dozens of components from the beginning may be reduced.

Referring to FIG. 8, an item selection area 810 may correspond to a tab that allows a selection of cybersecurity items being inquired or input, to perform a compliance matrix. In some embodiments, the cybersecurity items may correspond to preset values (CSR and P-TC).

In some embodiments, a function selection area 820 may correspond to an area that allows a selection of an inquiry or input state or a selection of a function for a data input.

In some embodiments, an inquiry input tab 821 may correspond to a tab that allows a selection of whether to inquire or input a dataset. For example, only when an input is selected, buttons 822 to 825 may appear and a dataset may be selected and modified. In an inquiry tab state, only a dataset, which is selected by the user by using the check box 832, may be displayed.

In some embodiments, a template button 822 may correspond to a button for downloading a preset template file for file import.

In some embodiments, an export button 823 may correspond to a button for performing export by downloading a selected dataset file.

In some embodiments, an import button 824 may correspond to a button for performing import by uploading a dataset file to be selected.

In some embodiments, the determine button 825 may correspond to a button for storing, as a third dataset, a value referring to a dataset selected via the check box 832 from datasets in a second DB that are displayed in a table 830.

In some embodiments, the table 830 may correspond to an area for inquiring, inputting, or modifying a third dataset of respective cybersecurity items.

In some embodiments, the guideline 831 may correspond to an interface showing whether a corresponding dataset corresponds to a CSL, on the basis of CSL information of a container currently being input.

In some embodiments, the check box 832 may correspond to a check box that allows the user to generate a third dataset by selecting or deselecting a dataset to be referred, by referring to the guideline 831. When loading the third DB generation interface, the check box 832 may be pre-selected to match the guideline 831.

In the embodiment of FIG. 8, when the inquiry input tab 821 is in an input state, by referring to the guideline 831, the user may select individual datasets having CSR IDs CSR_HW_4.1.2, CSR_HW_4.1.4, CSR_HW_4.2.1, CSR_HW_4.3.2, CSR_HW_5.1.1, CSR_HW_5.1.3, CSR_HW_5.1.4, and CSR_HW_5.1.5 via the checkbox 832 and then select the determine button 824. In the case where the determine button 824 is selected, a reference value for a checked individual dataset may be stored as a third dataset. In some embodiments, in the case where the inquiry input tab 821 is in an inquiry state, only selected CSR individual datasets may be displayed, and remaining CSR individual datasets may not be displayed. The above example may be because the user may perform a compliance matrix that designates only individual datasets having CSR IDs CSR_HW_4.1.2, CSR_HW_4.1.4, CSR_HW_4.2.1, CSR_HW_4.3.2, CSR_HW_5.1.1, CSR_HW_5.1.3, CSR_HW_5.1.4, and CSR_HW_5.1.5 as CSRs of corresponding containers and configure a third DB.

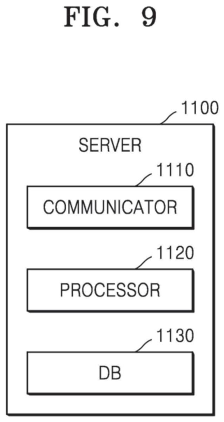

FIG. 9 is a block diagram of a server according to an embodiment.

In an embodiment, a server 1100 of FIG. 9 may correspond to the operation server 110 of FIG. 1.

Referring to FIG. 9, the server 1100 may include a communicator 1110, a processor 1120, and a DB 1130. FIG. 9 illustrates that the server 1100 includes only components related to embodiments. Those skilled in the art may understand that other general-purpose components may be further included, in addition to the components illustrated in FIG. 9.

The communicator 1110 may include one or more components that allow wired/wireless communication to be performed with other nodes. For example, the communicator 1110 may include at least one of a short-range communication unit (not shown), a mobile communication unit (not shown), and a broadcast receiver (not shown).

The DB 1130 may correspond to hardware that stores various types of data processed within the server 1100, and may store a program for processing and controlling by the processor 1120. The DB 1130 may store payment information, user information, and the like.

The DB 1130 may include random access memory (RAM), such as dynamic random access memory (DRAM) or static random access memory (SRAM), read-only memory (ROM), electrically erasable programmable read-only memory (EEPROM), CD-ROM, Blu-ray or other optical disk storages, a hard disk drive (HDD), a solid state drive (SSD), or flash memory.

The processor 1120 may control the overall operation of the server 1100. For example, the processor 1120 may control an input unit (not shown), a display (not shown), the communicator 1110, the DB 1130, and the like as a whole by executing programs stored in the DB 1130. The processor 1120 may control an operation of the server 1100 by executing the programs stored in the DB 1130. The processor 1120 may control at least some of the operations of the components described above with reference to FIGS. 1 to 9.

The processor 1120 may be implemented by using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

According to the problem solving means of the disclosure described above, work efficiency may be improved by eliminating duplicate work between individual projects by reusing a standardized database.

In addition, a three-layer database structure and version management may ensure stability by ensuring data consistency and preventing data from being randomly changed.

In addition, new security threats and regulations may be systematically updated, and thus, continuous security level management may be performed with respect to new vehicles as well as existing mass-produced vehicles.

Embodiments according to the disclosure may be implemented in the form of a computer program that may be executed via various types of components on a computer, and the computer program may be recorded on a computer-readable medium. Here, the medium may include magnetic media, such as a hard disk, a floppy disk, and a magnetic tape, optical recording media, such as CD-ROM and DVD, a magneto-optical medium, such as a floptical disk, and hardware devices, such as ROM, RAM, and flash memory, specially configured to store and execute program instructions.

Meanwhile, the computer program may be specially designed and configured for the disclosure, or may be known to and used by those skilled in the art of the computer software field. Examples of the computer program may include not only machine language code generated by a compiler but also high-level language code that may be executed by a computer by using an interpreter or the like.

According to an embodiment, the method according to various embodiments of the disclosure may be included and provided in computer program products. The computer program products may be traded between sellers and buyers as commodities. The computer program products may be distributed in the form of device-readable storage media (e.g., compact disc read only memory (CD-ROM)), or may be distributed (e.g., downloaded or uploaded) online via an application store (e.g., Play Store TM) or directly between two user devices. When distributed online, at least a portion of a computer program product may be temporarily stored or temporarily generated in a device-readable storage medium such as a server of a manufacturer, a server of an application store, or a memory of a relay server.

## Claims

1. A method of building a database configured to effectively respond to cybersecurity regulations, the method comprising:
configuring a first database, comprising one or more cybersecurity items and a first dataset which is an entire dataset of the respective cybersecurity items;
configuring a second database which is generated for each version and comprises a second dataset of the respective cybersecurity items; and
configuring a third database which is generated for each project and comprises a third dataset of the respective cybersecurity items, wherein the second dataset comprises a dataset generated by copying one or more individual datasets of a first dataset in the first database, and the third dataset comprises a dataset which refers to all or some of datasets stored in the second database of a particular version and is generated for each of a plurality of containers belonging to the project.

2. The method of claim 1, wherein the configuring the second database comprises:
generating a second database of an n^{th} version;
providing a second database generation interface configured to select, for the respective cybersecurity items, one or more individual datasets from all datasets in the first database; and
storing, in the second database of the n^{th} version, a second dataset generated by copying the one or more individual datasets selected via the second database generation interface, wherein n comprises a natural number of 1 or more.

3. The method of claim 2, further comprising:
providing a relationship dataset generation interface configured to establish a relationship between two preset cybersecurity items from among the plurality of cybersecurity items;
generating a relationship dataset in which a relationship between a particular dataset of a first cybersecurity item and a particular dataset of a second cybersecurity item from among the plurality of cybersecurity items is established by using a value acquired via the relationship dataset generation interface; and
storing the relationship dataset in the second database.

4. The method of claim 2, wherein the generating the second database of the n^{th} version comprises generating the second database of the n^{th} version by acquiring, from a user terminal, a request for generating a second database of a new version.

5. The method of claim 2, wherein the generating the second database of the n^{th} version comprises, in a case where data added to the first database passes a preset verification, generating the second database of the n^{th} version.

6. The method of claim 1, wherein the second database generated for each version has, for each version, one state from a first state and a second state, and a second dataset included in the second database is modified only when the second database is in the first state.

7. The method of claim 5, wherein a second database of a new version is generated only when a second database of an existing version is in the second state, and in a case where the second database of the new version is generated, the state of the second database of the existing version does not transition from the second state to the first state.

8. The method of claim 1, wherein the configuring the third database comprises:
receiving project information referring to a second database of a particular version;
providing a third database generation interface configured to select, for one or more preset cybersecurity items, one or more individual datasets from a second dataset stored in the second database of the particular version, on the basis of the project information;
generating a third dataset such that one or more individual datasets selected via the third database generation interface refer to a value stored in the second database; and
storing, for each container, the third dataset in the third database.

9. The method of claim 8, wherein in the receiving the project information referring to the second database of the particular version, the second database of the particular version comprises the second database that is in the second state.

10. The method of claim 8, further comprising:
generating an additional dataset of remaining cybersecurity items excluding the preset cybersecurity items, on the basis of the third dataset of the preset cybersecurity items; and
storing, in the third database, the additional dataset generated for each container.

11. The method of claim 8, further comprising: after receiving the project information,
acquiring cybersecurity level information of each container corresponding to the project information; and
displaying a predefined dataset corresponding to the preset cybersecurity items, on the basis of the cybersecurity level information of each container.

12. The method of claim 1, wherein the configuring the first database comprises:
providing a first database generation interface configured to input a dataset of attributes for the respective cybersecurity items; and
configuring the first database by using a value acquired via the first database generation interface.

13. The method of claim 1, wherein, even in a case where some of all datasets included in the first database is changed, modified, or added, the value stored in a pre-generated second database is not automatically changed.

14. A database system configured to effectively respond to cybersecurity regulations, the system comprising:
a first database, comprising one or more cybersecurity items and a first dataset which is an entire dataset of the respective cybersecurity items;
a second database which is generated for each version and comprises a second dataset of the respective cybersecurity items; and
a third database which is generated for each project and comprises a third dataset of the respective cybersecurity items, wherein the second dataset comprises a dataset generated by copying one or more individual datasets of a first dataset in the first database, and the third dataset comprises a dataset which refers to all or some of datasets stored in the second database of a particular version and is generated for each of a plurality of containers belonging to the project.
